# FASCICULE DE BREVET EUROPEEN

(11) **EP 4 252 336 B1**
(45) Date de publication et mention de la délivrance du brevet: **20.11.2024**
(21) Numéro de dépôt: 21823982.0
(22) Date de dépôt: 24.11.2021
(51) Int. Cl.: H02K 3/28, F02C 7/22, F02C 9/30, H02K 17/14, H02P 25/20

(54) **DISPOSITIF D'ACTIONNEMENT DE POMPE, SYSTEME DE POMPAGE, AERONEF ET PROCEDE D'ALIMENTATION EN CARBURANT ASSOCIES**
PUMPENBETÄTIGUNGSVORRICHTUNG UND ZUGEHÖRIGES PUMPSYSTEM, FLUGZEUG UND KRAFTSTOFFVERSORGUNGSVERFAHREN
PUMP ACTUATING DEVICE, AND ASSOCIATED PUMPING SYSTEM, AIRCRAFT AND FUEL SUPPLY METHOD

(30) Priorité: 25.11.2020 FR 2012099
(43) Date de publication de la demande: 04.10.2023
(73) Titulaire: SAFRAN AIRCRAFT ENGINES, 75015 Paris (FR)
(72) Inventeur: DE WERGIFOSSE, Huguette, 77550 MOISSY-CRAMAYEL (FR); DE BLOIS, Nicolas, Bertrand, Georges, 77550 MOISSY-CRAMAYEL (FR)
(74) Mandataire: Brevalex
(86) Numéro de dépôt international: PCT/FR2021/052081
(87) Numéro de publication internationale: WO 2022/112713

(56) Documents cités:
- EP-A1- 2 940 272
- EP-A2- 1 031 716
- WO-A1-2019/008066

## Description

### DOMAINE TECHNIQUE

La présente invention concerne un dispositif d'actionnement destiné à entraîner au moins une pompe de carburant d'un système de pompage de carburant pour un moteur d'aéronef.

L'invention concerne également un système de pompage de carburant, un aéronef embarquant un tel système de pompage, et un procédé d'alimentation en carburant d'un moteur d'un tel aéronef.

L'invention s'applique au domaine de l'aéronautique, en particulier à l'alimentation en carburant d'un moteur d'aéronef.

### ÉTAT DE LA TECHNIQUE ANTÉRIEURE

Il est connu d'utiliser, à bord d'un aéronef, au moins une pompe pour acheminer du carburant depuis un réservoir de carburant de l'aéronef vers un dispositif d'injection de carburant d'un moteur de l'aéronef. Une telle pompe, généralement une pompe volumétrique, est classiquement actionnée au moyen d'un circuit hydraulique de l'aéronef.

Dans le cadre de l'électrification de certains actionneurs d'aéronef, dont les lignes d'acheminement de carburant, il a été proposé d'entraîner la pompe précédemment décrite grâce à une machine électrique tournante. Plus précisément, il a été proposé de fournir une première machine électrique tournante, dite « génératrice », et une deuxième machine électrique tournante, dite « motrice », électriquement reliées entre elles. Dans ce cas, l'arbre de sortie de la motrice est couplé à la pompe pour son entraînement, et l'arbre de la génératrice est couplé à un arbre du moteur de l'aéronef. La génératrice et la motrice sont typiquement des machines triphasées. De cette façon, lors du fonctionnement du moteur de l'aéronef, la génératrice délivre des courants dont la fréquence est proportionnelle à la vitesse de rotation du moteur de l'aéronef (également appelée « régime »). Il en résulte que la vitesse de rotation en sortie de la motrice est proportionnelle au régime du moteur, de sorte que la pompe est entraînée pour délivrer du carburant avec un débit proportionnel au régime du moteur.

Toutefois, un tel dispositif d'actionnement ne donne pas entière satisfaction.

En effet, afin que le moteur soit convenablement alimenté en carburant quel que soit son régime, la pompe entraînée par un tel dispositif d'actionnement est dimensionnée de sorte que, pour un régime donné quelconque, le débit fourni par la pompe soit au moins égal au débit requis par le moteur pour ledit régime. Un tel dimensionnement consiste généralement en le choix d'une pompe de cylindrée appropriée.

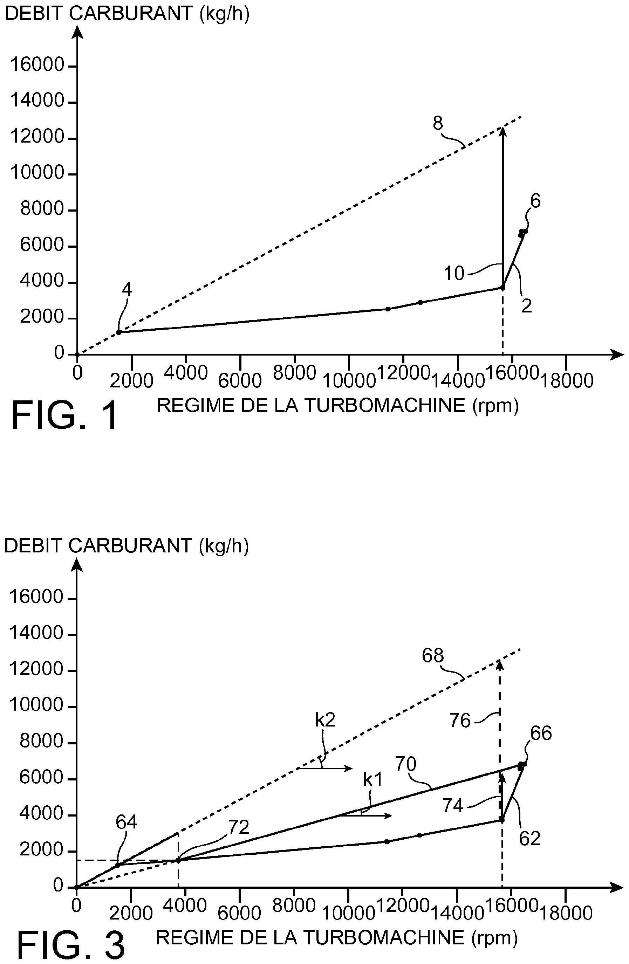

Or, comme illustré par la figure 1, la courbe 2 d'évolution du débit de carburant requis par le moteur en fonction de son régime est généralement une courbe croissante concave. Dans ce cas, la cylindrée est imposée par le point de fonctionnement qui présente le plus grand rapport entre le débit de carburant requis et le régime du moteur, parmi le point de fonctionnement de plus bas régime (correspondant à une phase d'autorotation d'une soufflante du moteur, ou « *windmilling* » en anglais), illustré par le point 4, et le point de fonctionnement de régime le plus élevé (correspondant à une phase de décollage, ou « *take-off* » en anglais), illustré par le point 6.

Dans le cas où la cylindrée est imposée par le point de fonctionnement de plus bas régime 4, le débit de carburant fourni par la pompe, symbolisé par la droite 8 qui passe par ledit point de fonctionnement de plus bas régime 4, est toujours supérieur au débit de carburant requis par le moteur. Par exemple, au point de fonctionnement de régime le plus élevé 6, le débit de carburant excédentaire est symbolisé par la flèche 10. Dans ce cas, la mise en place d'un dispositif de recirculation de carburant est nécessaire.

Lors de son fonctionnement, un tel dispositif de recirculation, généralement connecté en sortie d'un boîtier d'engrenages du moteur, prélève de la puissance mécanique en sortie dudit boîtier d'engrenages, et dissipe une partie de la puissance mécanique prélevée sous forme de chaleur. Or, une telle dissipation thermique est préjudiciable car le circuit carburant (qui comprend le dispositif d'injection) est utilisé comme une source froide pour le circuit huile. Toute dissipation thermique supplémentaire a un impact négatif sur la taille des échangeurs.

EP2940272A1 divulgue un dispositif d'actionnement destiné à entraîner au moins une pompe de carburant d'un système de pompage de carburant pour un moteur d'aéronef.

Un but de l'invention est donc de proposer un dispositif d'actionnement de pompe qui, pour un point de fonctionnement donné quelconque du moteur, entraîne un écart moins important entre le débit de carburant requis pour ledit point de fonctionnement et le débit de carburant fourni par la pompe, c'est-à-dire qui réduit le besoin de recirculation de carburant.

### EXPOSÉ DE L'INVENTION

A cet effet, l'invention a pour objet un dispositif d'actionnement du type précité, dans lequel comportant une machine électrique tournante motrice, une machine électrique tournante génératrice et un organe de connexion électrique,
la machine électrique tournante motrice étant une machine asynchrone à couplage Dahlander comprenant un premier rotor, destiné à être mécaniquement couplé à chaque pompe pour son actionnement, et un premier stator comprenant au moins une phase d'entrée, chaque phase d'entrée comprenant deux enroulements,
la machine électrique tournante génératrice comprenant un deuxième rotor, destiné à être mécaniquement couplé à un arbre du moteur formant un arbre d'entraînement, et un deuxième stator comprenant au moins une phase de sortie,
l'organe de connexion électrique étant configuré pour connecter électriquement chaque phase de sortie à une phase d'entrée,
l'organe de connexion électrique étant, en outre, configuré de façon à, pour chaque phase d'entrée, connecter les enroulements correspondants en série ou en parallèle en fonction d'un régime du moteur.

En effet, un tel dispositif d'actionnement autorise de choisir le point de fonctionnement de régime le plus élevé pour le dimensionnement de la pompe (en particulier pour le choix de sa cylindrée), même lorsque le plus grand rapport entre le débit de carburant requis et le régime du moteur correspond au point de fonctionnement de plus bas régime (c'est-à-dire la phase d'autorotation de la soufflante). Dans ce cas, l'organe de connexion électrique, par son action, autorise deux modes de fonctionnement distincts :
- pour un régime supérieur à un régime dit « de commutation », les enroulements de la motrice sont connectés selon une première configuration, la motrice étant alors entraînée, du fait de son alimentation par la génératrice, à une vitesse de rotation proportionnelle au régime du moteur, avec un premier rapport de proportionnalité ; et
- en deçà du régime de commutation, les enroulements de la motrice sont connectés selon une deuxième configuration, la motrice étant alors entraînée, du fait de son alimentation par la génératrice, à une vitesse de rotation proportionnelle au régime du moteur, avec un deuxième rapport de proportionnalité supérieur au premier rapport de proportionnalité.

Le régime de commutation correspond, en particulier, au régime pour lequel le débit de carburant fourni dans la première configuration et le débit de carburant requis par le moteur sont égaux.

Il résulte de ce qui précède que, grâce au dispositif d'actionnement selon l'invention, l'écart entre le débit de carburant requis pour un point de fonctionnement donné quelconque du moteur de l'aéronef et le débit de carburant fourni par la pompe est moins important que celui obtenu au moyen des dispositifs d'actionnement connus. Le besoin de recirculation de carburant est donc bien réduit.

Suivant d'autres aspects avantageux de l'invention, le dispositif d'actionnement comporte une ou plusieurs des caractéristiques suivantes, prise(s) isolément ou suivant toutes les combinaisons techniquement possibles :
- l'organe de connexion électrique est configuré de façon à, pour chaque phase d'entrée de la machine électrique tournante motrice, connecter les enroulements correspondants en parallèle si le régime du moteur est inférieur ou égal à un régime de commutation prédéterminé, et en série sinon ;
- la machine électrique tournante motrice comprend trois phases d'entrée connectées entre elles suivant un couplage en triangle, les deux enroulements de chaque phase d'entrée étant électriquement connectés entre eux par leur extrémités en un point milieu, chaque enroulement d'une phase d'entrée donnée étant connecté à un enroulement correspondant d'une autre phase d'entrée respective à son extrémité opposée au point milieu correspondant pour former un sommet,

l'organe de connexion électrique comportant un étage de commande, un premier étage d'interrupteurs, un deuxième étage d'interrupteurs et un troisième étage d'interrupteurs,
chaque entrée du premier étage d'interrupteurs étant électriquement reliée à une phase de sortie respective de la machine électrique tournante génératrice, chaque sortie du premier étage d'interrupteurs étant reliée au point milieu d'une phase d'entrée respective,
chaque entrée du deuxième étage d'interrupteurs étant électriquement reliée à une phase de sortie respective de la machine électrique tournante génératrice, chaque sortie du deuxième étage d'interrupteurs étant reliée à un sommet respectif du premier stator,
les entrées du troisième étage d'interrupteurs étant électriquement reliées entre elles, chaque sortie du troisième étage d'interrupteurs étant reliée au point milieu d'une phase d'entrée respective,
l'étage de commande étant configuré de façon à, lorsque le régime du moteur est supérieur à un régime de commutation prédéterminé, commander le premier étage d'interrupteurs pour qu'il se trouve dans un état passant, et chacun parmi le deuxième étage d'interrupteurs et le troisième étage d'interrupteurs pour qu'il se trouve dans un état bloqué,
l'étage de commande étant également configuré de façon à, lorsque le régime du moteur est inférieur ou égal au régime de commutation prédéterminé, commander le premier étage d'interrupteurs pour qu'il se trouve dans un état bloqué, et chacun parmi le deuxième étage d'interrupteurs et le troisième étage d'interrupteurs pour qu'il se trouve dans un état passant.

En outre, l'invention a pour objet un système de pompage de carburant pour un moteur d'aéronef, le système de pompage comprenant au moins une pompe de carburant et un dispositif d'actionnement tel que défini ci-dessus, le premier rotor de la machine électrique tournante motrice étant mécaniquement couplé à chaque pompe pour son actionnement.

En outre, l'invention a pour objet un aéronef embarquant un système de pompage de carburant tel que défini ci-dessus, chaque pompe étant insérée entre un réservoir de carburant de l'aéronef et un dispositif d'injection de carburant d'un moteur de l'aéronef, le deuxième rotor de la machine électrique tournante génératrice étant mécaniquement couplé à un arbre du moteur.

L'invention a également pour objet un procédé d'alimentation en carburant d'un moteur d'un aéronef tel que défini ci-dessus, comprenant la connexion de chaque phase de sortie de la machine électrique tournante génératrice à une phase d'entrée de la machine électrique tournante motrice, le procédé d'alimentation comportant également, pour chaque phase d'entrée, la connexion des enroulements correspondants en série ou en parallèle en fonction d'un régime du moteur.

Selon un aspect avantageux, le procédé d'alimentation comporte, pour chaque phase d'entrée, la connexion des enroulements correspondants en parallèle si le régime du moteur est inférieur ou égal à un régime de commutation prédéterminé, et en série sinon.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
La figure 1 est un graphique représentant le besoin en carburant d'un moteur en fonction d'une vitesse de rotation de son arbre haute pression.
La figure 2 est une représentation schématique d'un système de pompage selon l'invention.
La figure 3 est similaire à la figure 1, l'évolution du débit de carburant fourni par le système de pompage de la figure 2 étant également représentée.

### EXPOSÉ DÉTAILLÉ DE MODES DE RÉALISATION PARTICULIERS

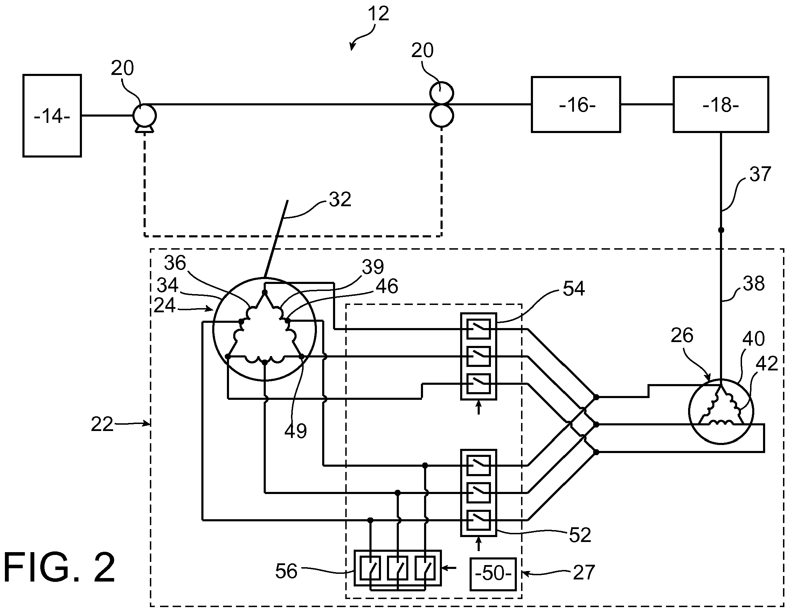

Un système 12 de pompage de carburant selon l'invention, en particulier pour un moteur d'aéronef, est illustré par la figure 2.

Le système de pompage 12 est destiné à acheminer du carburant depuis un réservoir de carburant 14 d'un aéronef (non représenté) vers un dispositif 16 d'injection de carburant d'un moteur 18 de l'aéronef.

Plus précisément, le système de pompage 12 comporte au moins une pompe 20 rotative, destinée à être agencée entre le réservoir de carburant 14 et le dispositif d'injection 16, et un dispositif d'actionnement 22 pour entraîner la ou chaque pompe 20.

Chaque pompe 20 est une pompe volumétrique, ou encore une pompe centrifuge.

Le dispositif d'actionnement 22 comporte une machine électrique tournante motrice 24 (dite « motrice »), une machine électrique tournante génératrice 26 (dite « génératrice ») et un organe de connexion électrique 27.

La motrice 24 est configurée pour recevoir de l'énergie électrique depuis la génératrice 26, et pour convertir l'énergie électrique reçue en énergie mécanique destinée à actionner la ou chaque pompe 20.

La motrice 24 est une machine asynchrone à couplage Dahlander. La motrice 24 comprend un rotor 32 (dit « premier rotor ») et un stator 34 (dit « premier stator »).

Le premier rotor 32 est mécaniquement couplé à au moins une pompe 20 pour causer son actionnement.

Le premier stator 34 comporte au moins une phase 36, dit « phase d'entrée », en particulier trois phases d'entrée 36.

Chaque phase d'entrée 36 de la motrice 24 est connectée à une phase de sortie 42 correspondante de la génératrice 26, par l'intermédiaire de l'organe de connexion électrique 27, comme cela sera décrit ultérieurement.

Chaque phase d'entrée 36 comporte deux enroulements 39, comprenant chacun deux extrémités. Pour chaque phase d'entrée 36, les deux enroulements 39 correspondants sont électriquement reliés entre eux, par l'une de leurs extrémités, en un point milieu 46. En outre, pour chaque enroulement 39, l'extrémité opposée au point milieu 46, associée à la référence numérique 48, est connectée à l'organe de connexion électrique 27.

Comme cela apparaît sur la figure 2, l'extrémité 48 de chaque phase d'entrée 36 est connectée à une extrémité 48 d'une autre phase d'entrée 36 respective en un sommet 49, de sorte que les phases d'entrée 36 sont connectées entre elles suivant un couplage en triangle. Néanmoins, un couplage en étoile des phases d'entrée 36 est également envisageable.

Avantageusement, et notamment afin de faciliter le démarrage de la motrice 24, le dispositif d'actionnement 22 comprend également un organe de couplage (non représenté) configuré pour faire basculer les phases d'entrée entre un couplage triangle et un couplage étoile.

La génératrice 26 est configurée pour prélever de l'énergie mécanique au niveau d'un arbre 37 du moteur 18 (dit « arbre d'entraînement »), et pour convertir l'énergie mécanique prélevée en énergie électrique. L'arbre d'entraînement 37 est, par exemple, l'arbre basse pression du moteur 18.

La génératrice 26 comprend un rotor 38 (dit « deuxième rotor ») et un stator 40 (dit « deuxième stator »).

Le deuxième rotor 38 est mécaniquement couplé à l'arbre d'entraînement 37 du moteur au moyen de tout organe mécanique de transmission adapté tel qu'un réducteur.

Le deuxième stator 40 comporte au moins une phase 42, dite « phase de sortie ». Plus spécifiquement, le nombre de phases de sortie 42 du deuxième stator est égal au nombre de phases d'entrée 36 du premier stator 34, en particulier trois phases de sortie 42. Chaque phase de sortie 42 est électriquement reliée à l'organe de connexion électrique 27 pour sa connexion à une phase d'entrée 36 correspondante.

La génératrice 26 est, de préférence une machine synchrone à aimants permanents ou une machine asynchrone.

L'organe de connexion électrique 27 est configuré pour connecter électriquement chaque phase de sortie 42 à une phase d'entrée 36. En outre, l'organe de connexion électrique 27 est configuré de façon à, pour chaque phase d'entrée 36 de la motrice 24, connecter les enroulements 39 correspondants en série ou en parallèle, en fonction du régime courant du moteur 18.

L'organe de connexion électrique 27 comprend un étage de commande 50, un premier étage d'interrupteurs 52, un deuxième étage d'interrupteurs 54 et un troisième étage d'interrupteurs 56.

L'étage de commande 50 est configuré pour commander l'état passant ou bloqué de chaque étage d'interrupteurs 52, 54, 56 (c'est-à-dire de chacun de leurs interrupteurs respectifs).

Chaque étage d'interrupteurs 52, 54, 56 comprend autant d'interrupteurs 58 que de phases d'entrée 36. En particulier, chaque étage d'interrupteurs comprend trois interrupteurs.

Avantageusement, chaque interrupteur 58 est un relais, un contacteur ou un interrupteur électronique, afin de limiter ses risques de détérioration dans le temps.

Chaque entrée du premier étage d'interrupteurs 52 (c'est-à-dire l'entrée de chacun de ses interrupteurs) est électriquement reliée à une phase de sortie 42 respective de la génératrice 26. En outre, chaque sortie du premier étage d'interrupteurs 52 (c'est-à-dire la sortie de chacun de ses interrupteurs) est reliée au point milieu 46 d'une phase d'entrée 36 respective.

Chaque entrée du deuxième étage d'interrupteurs 54 est électriquement reliée à une phase de sortie 42 respective de la génératrice 26. En outre, chaque sortie du deuxième étage d'interrupteurs 54 est reliée à un sommet 49 respectif du premier stator 34.

Enfin, les entrées du troisième étage d'interrupteurs 56 sont électriquement reliées entre elles. En outre, chaque sortie du troisième étage d'interrupteurs 56 est reliée au point milieu 46 d'une phase d'entrée 36 respective.

L'étage de commande 50 de l'organe de connexion électrique 27 est adapté pour commander l'état de chacun parmi le premier, le deuxième et le troisième étage d'interrupteurs en fonction d'un régime du moteur 18.

Un tel régime du moteur découle, par exemple, de la vitesse de rotation d'un arbre du moteur 18, notamment l'arbre d'entraînement 37, ou encore d'une information représentative d'une phase de vol de l'aéronef, ou encore des instructions de pilotage de l'aéronef.

Plus précisément encore, lorsque le régime du moteur 18 est supérieur à un régime de commutation prédéterminé, l'étage de commande 50 est configuré de façon à commander :
- le premier étage d'interrupteurs 52 pour qu'il se trouve dans un état passant (c'est-à-dire pour que chacun de ses interrupteurs se trouve dans un état passant) ; et
- le deuxième étage d'interrupteurs 54 et le troisième étage d'interrupteurs 56 pour qu'ils se trouvent chacun dans un état bloqué (c'est-à-dire pour que chacun de leurs interrupteurs respectifs se trouve dans un état bloqué).

De cette façon, pour chaque phase d'entrée 36, les enroulements 39 correspondant sont connectés en série. En outre, chaque phase d'entrée 36 est connectée à une phase de sortie 42 correspondante. Il en résulte qu'en fonctionnement, la motrice 24 est entraînée, du fait de son alimentation par la génératrice 26, à une vitesse de rotation proportionnelle au régime du moteur, avec un premier rapport de proportionnalité k₁. Le débit de carburant délivré par le système de pompage 12, dans cette configuration, est illustré, sur la figure 3, par le segment de la droite 70 compris entre les points 72 et 66, qui seront décrits ultérieurement.

En outre, lorsque le régime du moteur 18 est inférieur ou égal au régime de commutation prédéterminé, l'étage de commande 50 est configuré de façon à commander :
- le premier étage d'interrupteurs 52 pour qu'il se trouve dans un état bloqué ; et
- le deuxième étage d'interrupteurs 54 et le troisième étage d'interrupteurs 56 pour qu'ils se trouvent chacun dans un état passant.

De cette façon, pour chaque phase d'entrée 36, les enroulements 39 correspondant sont connectés en parallèle. En outre, chaque phase d'entrée 36 est connectée à une phase de sortie 42 correspondante. Il en résulte qu'en fonctionnement, la motrice 24 est entraînée, du fait de son alimentation par la génératrice 26, à une vitesse de rotation proportionnelle au régime du moteur, avec un deuxième rapport de proportionnalité k₂ égal au double du premier rapport de proportionnalité k₁. Le débit de carburant délivré par le système de pompage 12, dans cette configuration, est illustré, sur la figure 3, par le segment de la droite 68 compris entre l'origine et le point 72.

Le régime de commutation va maintenant être défini, en référence à la figure 3.

Sur cette figure, la courbe 62 représente l'évolution du débit de carburant requis par le moteur 18 en fonction de son régime. La courbe 62 s'étend du point 64, qui est le point de fonctionnement de plus bas régime du moteur 18, au point 66, qui est le point de fonctionnement de régime le plus élevé.

Le point 64 est associé à un point de fonctionnement pour lequel le rapport entre le débit de carburant requis et le régime du moteur 18 est plus élevé que le rapport entre le débit de carburant requis et le régime du moteur associé au point 66.

Comme indiqué précédemment, une telle courbe 62 est généralement croissante avec le régime et sensiblement concave.

La droite 68, qui passe par le point de fonctionnement de plus bas régime 64, représente le débit de carburant fourni par le système de pompage 12 lorsque, pour chaque phase d'entrée 36 de la motrice 24, les enroulements 39 correspondants sont connectés en parallèle.

La cylindrée de la pompe 20 est choisie de sorte que, au point 64, le débit de carburant fourni par le système de pompage 12 soit au moins égal au débit de carburant requis par le moteur, les enroulements 39 de chaque phase d'entrée 36 étant connectés en parallèle.

En outre, la droite 70 représente le débit de carburant fourni par le système de pompage 12 lorsque les enroulements 39 de chaque phase d'entrée 36 de la motrice 24 sont connectés en série.

Comme cela apparaît sur cette figure 3, pour tout régime supérieur au régime associé au point 72 d'intersection de la droite 70 avec la courbe 62, le système de pompage 12, dans lequel les enroulements 39 de chaque phase d'entrée 36 de la motrice 24 sont connectés en série, est apte à fournir du carburant au moteur 18 avec un débit supérieur ou égal au débit requis par le moteur. Ledit point d'intersection forme le point de commutation, le régime associé étant dit « régime de commutation ».

Il apparaît sur cette figure que, au-delà du régime de commutation, le besoin en recirculation de carburant lorsque la pompe 20 est entraînée pour fournir du carburant au dispositif d'injection 16 avec un débit qui suit la droite 70 (flèche 74) est significativement réduit par rapport au besoin en recirculation de carburant dans la situation où la pompe 20 est entraînée pour fournir du carburant au dispositif d'injection 16 avec un débit qui suit la droite 68 (flèche 76).

En variante, le régime de commutation est un régime prédéterminé distinct du régime correspondant au point de fonctionnement 72 précédemment décrit.

Le fonctionnement du système de pompage 12 va maintenant être décrit.

Pendant le fonctionnement du moteur 18, l'organe de connexion électrique 27 commande la configuration des enroulements 39 des phases d'entrée 36 en fonction du régime du moteur 18.

Tant que le régime du moteur 18 est inférieur ou égal au régime de commutation prédéterminé, alors l'étage de commande 50 commande chaque étage d'interrupteurs 52, 54, 56 de sorte que les enroulements 39 de chaque phase d'entrée 36 de la motrice 24 soient connectés en parallèle, et que chaque phase d'entrée 36 soit connectée à une phase de sortie 42 correspondant de la génératrice 26.

Dans ce cas, la motrice 24 entraîne la pompe 20 à sa vitesse maximale au regard des courants issus de la génératrice 26. De cette façon, du fait de son dimensionnement, la pompe 20 délivre du carburant au moteur 18 suivant un débit au moins égal au débit de carburant requis par ledit moteur 18.

Si le régime du moteur 18 dépasse le régime de commutation prédéterminé, alors l'étage de commande 50 commande chaque étage d'interrupteurs 52, 54, 56 de sorte que les enroulements 39 de chaque phase d'entrée 36 de la motrice 24 soient connectés en série, et que chaque phase d'entrée 36 soit connectée à une phase de sortie 42 correspondant de la génératrice 26.

Dans ce cas, la pompe 20 demeure entraînée à une vitesse proportionnelle à celle du moteur, mais délivre du carburant au moteur 18 suivant un débit moitié moindre comparé au débit de carburant qui aurait été obtenu si les enroulements 39 de chaque phase d'entrée 36 avaient été connectés en parallèle. Néanmoins, le débit de carburant fourni est au moins égal au débit de carburant requis par le moteur, et les besoins en recirculation de carburant sont réduits.

## Revendications

1. Dispositif d'actionnement (12) destiné à entraîner au moins une pompe (20) de carburant d'un système (2) de pompage de carburant pour un moteur (18) d'aéronef, le dispositif d'actionnement (12) comportant une machine électrique tournante motrice (24), une machine électrique tournante génératrice (26) et un organe de connexion électrique (27),
la machine électrique tournante motrice (24) étant une machine asynchrone à couplage Dahlander comprenant un premier rotor (32), destiné à être mécaniquement couplé à chaque pompe (20) pour son actionnement, et un premier stator (34) comprenant au moins une phase d'entrée (36), chaque phase d'entrée comprenant deux enroulements (39),
la machine électrique tournante génératrice (26) comprenant un deuxième rotor (32), destiné à être mécaniquement couplé à un arbre (37) du moteur (18) formant un arbre d'entraînement, et un deuxième stator (40) comprenant au moins une phase de sortie (42),
l'organe de connexion électrique (27) étant configuré pour connecter électriquement chaque phase de sortie (42) à une phase d'entrée (36),
l'organe de connexion électrique (27) étant, en outre, configuré de façon à, pour chaque phase d'entrée (36), connecter les enroulements (39) correspondants en série ou en parallèle en fonction d'un régime du moteur (18).

2. Dispositif d'actionnement (12) selon la revendication 1, dans lequel l'organe de connexion électrique (27) est configuré de façon à, pour chaque phase d'entrée (36) de la machine électrique tournante motrice (24), connecter les enroulements (39) correspondants en parallèle si le régime du moteur est inférieur ou égal à un régime de commutation prédéterminé, et en série sinon.

3. Dispositif d'actionnement (12) selon la revendication 1 ou 2, dans lequel la machine électrique tournante motrice (24) comprend trois phases d'entrée (36) connectées entre elles suivant un couplage en triangle,
les deux enroulements (39) de chaque phase d'entrée (36) étant électriquement connectés entre eux par leur extrémités en un point milieu (46), chaque enroulement (39) d'une phase d'entrée (36) donnée étant connecté à un enroulement (39) correspondant d'une autre phase d'entrée (36) respective à son extrémité opposée au point milieu (46) correspondant pour former un sommet (49),
l'organe de connexion électrique (27) comportant un étage de commande (50), un premier étage d'interrupteurs (52), un deuxième étage d'interrupteurs (54) et un troisième étage d'interrupteurs (56),
chaque entrée du premier étage d'interrupteurs (52) étant électriquement reliée à une phase de sortie (42) respective de la machine électrique tournante génératrice (26), chaque sortie du premier étage d'interrupteurs (52) étant reliée au point milieu (46) d'une phase d'entrée (36) respective,
chaque entrée du deuxième étage d'interrupteurs (54) étant électriquement reliée à une phase de sortie (42) respective de la machine électrique tournante génératrice (26), chaque sortie du deuxième étage d'interrupteurs (54) étant reliée à un sommet (49) respectif du premier stator (34),
les entrées du troisième étage d'interrupteurs (56) étant électriquement reliées entre elles, chaque sortie du troisième étage d'interrupteurs (56) étant reliée au point milieu (46) d'une phase d'entrée (36) respective,
l'étage de commande (50) étant configuré de façon à, lorsque le régime du moteur (18) est supérieur à un régime de commutation prédéterminé, commander le premier étage d'interrupteurs (52) pour qu'il se trouve dans un état passant, et chacun parmi le deuxième étage d'interrupteurs (54) et le troisième étage d'interrupteurs (56) pour qu'il se trouve dans un état bloqué,
l'étage de commande (50) étant également configuré de façon à, lorsque le régime du moteur (18) est inférieur ou égal au régime de commutation prédéterminé, commander le premier étage d'interrupteurs (52) pour qu'il se trouve dans un état bloqué, et chacun parmi le deuxième étage d'interrupteurs (54) et le troisième étage d'interrupteurs (56) pour qu'il se trouve dans un état passant.

4. Système (12) de pompage de carburant pour un moteur d'aéronef, le système de pompage (12) comprenant au moins une pompe (20) de carburant et un dispositif d'actionnement (12) selon l'une quelconque des revendications 1 à 3, le premier rotor (32) de la machine électrique tournante motrice (24) étant mécaniquement couplé à chaque pompe (20) pour son actionnement.

5. Aéronef embarquant un système de pompage (12) selon la revendication 4, chaque pompe (20) étant insérée entre un réservoir de carburant (14) de l'aéronef et un dispositif (16) d'injection de carburant d'un moteur (18) de l'aéronef, le deuxième rotor (38) de la machine électrique tournante génératrice (26) étant mécaniquement couplé à un arbre (37) du moteur (18).

6. Procédé d'alimentation en carburant d'un moteur d'un aéronef selon la revendication 5, comprenant la connexion de chaque phase de sortie (42) de la machine électrique tournante génératrice (26) à une phase d'entrée (36) de la machine électrique tournante motrice (24), le procédé d'alimentation comportant également, pour chaque phase d'entrée (36), la connexion des enroulements (39) correspondants en série ou en parallèle en fonction d'un régime du moteur.

7. Procédé d'alimentation en carburant d'un moteur (18) selon la revendication 6, comportant, pour chaque phase d'entrée (36), la connexion des enroulements (39) correspondants en parallèle si le régime du moteur est inférieur ou égal à un régime de commutation prédéterminé, et en série sinon.

## Patentansprüche

1. Betriebsvorrichtung (12), die dazu bestimmt ist, mindestens eine Kraftstoffpumpe (20) eines Kraftstoffpumpsystems (2) für einen Luftfahrzeugmotor (18) anzutreiben, wobei die Betriebsvorrichtung (12) eine drehende elektrische Antriebsmaschine (24), eine drehende elektrische Generierungsmaschine (26) und ein elektrisches Verbindungselement (27) enthält,
wobei die drehende elektrische Antriebsmaschine (24) eine asynchrone Maschine mit Dahlander-Kopplung ist, die einen ersten Rotor (32) umfasst, der dazu bestimmt ist, mechanisch mit jeder Pumpe (20) für ihren Betrieb gekoppelt zu werden, und einen ersten Stator (34), der mindestens eine Eingangsphase (36) umfasst, wobei jede Eingangsphase zwei Wicklungen (39) umfasst,
wobei die drehende elektrische Generierungsmaschine (26) einen zweiten Rotor (32) umfasst, der dazu bestimmt ist, mechanisch mit einer Welle (37) des Motors (18) gekoppelt zu werden und eine Antriebswelle bildend, und einen zweiten Stator (40), der mindestens eine Ausgangsphase (42) umfasst,
wobei das elektrische Verbindungselement (27) konfiguriert ist, um jede Ausgangsphase (42) elektrisch mit einer Eingangsphase (36) zu verbinden,
wobei das elektrische Verbindungselement (27) darüber hinaus so konfiguriert ist, dass es, für jede Eingangsphase (36), die entsprechenden Wicklungen (39) in Reihe oder parallel, in Abhängigkeit einer Motordrehzahl (18), schaltet.

2. Betriebsvorrichtung (12) nach Anspruch 1, wobei das elektrische Verbindungselement (27) so konfiguriert ist, dass es, für jede Eingangsphase (36) der drehenden elektrischen Antriebsmaschine (24), die entsprechenden Wicklungen (39) parallel schaltet, wenn die Motordrehzahl kleiner oder gleich einer vorbestimmten Schaltdrehzahl ist, und andernfalls in Reihe.

3. Betriebsvorrichtung (12) nach Anspruch 1 oder 2, wobei die drehende elektrische Antriebsmaschine (24) drei Eingangsphasen (36) umfasst, die über eine Dreieckskopplung miteinander verbunden sind,
wobei die zwei Wicklungen (39) jeder Eingangsphase (36) durch ihre Enden an einem Mittelpunkt (46) elektrisch miteinander verbunden sind, wobei jede Wicklung (39) einer gegebenen Eingangsphase (36) mit einer entsprechenden Wicklung (39) einer jeweiligen anderen Eingangsphase (36) an ihrem Ende gegenüber dem entsprechenden Mittelpunkt (46) verbunden ist, um einen Scheitelpunkt (49) zu bilden,
wobei das elektrische Verbindungselement (27) eine Steuerstufe (50), eine erste Schalterstufe (52), eine zweite Schalterstufe (54) und eine dritte Schalterstufe (56) enthält,
wobei jeder Eingang der ersten Schalterstufe (52) elektrisch an eine jeweilige Ausgangsphase (42) der drehenden elektrischen Generierungsmaschine (26) angeschlossen ist, wobei jeder Ausgang der ersten Schalterstufe (52) an den Mittelpunkt (46) einer jeweiligen Eingangsphase (36) angeschlossen ist,
wobei jeder Eingang der zweiten Schalterstufe (54) elektrisch an eine jeweilige Ausgangsphase (42) der drehenden elektrischen Generierungsmaschine (26) angeschlossen ist, wobei jeder Ausgang der zweiten Schalterstufe (54) an einen jeweiligen Scheitelpunkt (49) des ersten Stators (34) angeschlossen ist,
wobei die Eingänge der dritten Schalterstufe (56) elektrisch aneinander angeschlossen sind, wobei jeder Ausgang der dritten Schalterstufe (56) an den Mittelpunkt (46) einer jeweiligen Eingangsphase (36) angeschlossen ist,
wobei die Steuerstufe (50) so konfiguriert ist, dass sie, wenn die Motordrehzahl (18) höher als eine vorbestimmte Schaltdrehzahl ist, die erste Schalterstufe (52) so steuert, dass sie sich in einem Durchlasszustand befindet, und jede von der zweiten Schalterstufe (54) und der dritten Schalterstufe (56), dass sie sich in einem Blockierzustand befindet,
wobei die Steuerstufe (50) auch so konfiguriert ist, dass sie, wenn die Motordrehzahl (18) kleiner oder gleich der vorbestimmten Schaltdrehzahl ist, die erste Schalterstufe (52) so steuert, dass sie sich in einem Blockierzustand befindet, und jede von der zweiten Schalterstufe (54) und der dritten Schalterstufe (56), dass sie sich in einem Durchlasszustand befindet.

4. Kraftstoffpumpsystem (12) für einen Luftfahrzeugmotor, wobei das Pumpsystem (12) mindestens eine Kraftstoffpumpe (20) und eine Betriebsvorrichtung (12) nach einem der Ansprüche 1 bis 3 umfasst, wobei der erste Rotor (32) der drehenden elektrischen Antriebsmaschine (24) für seinen Betrieb mechanisch mit jeder Pumpe (20) gekoppelt ist.

5. Luftfahrzeug, in dem ein Pumpsystem (12) nach Anspruch 4 eingebaut ist, wobei jede Pumpe (20) zwischen einem Kraftstofftank (14) des Luftfahrzeugs und einer Kraftstoffeinspritzvorrichtung (16) eines Motors (18) des Luftfahrzeugs eingesetzt ist, wobei der zweite Rotor (38) der drehenden elektrischen Generierungsmaschine (26) mechanisch mit einer Welle (37) des Motors (18) gekoppelt ist.

6. Verfahren zum Zuführen von Kraftstoff zu einem Luftfahrzeugmotor nach Anspruch 5, das Verbinden jeder Ausgangsphase (42) der drehenden elektrischen Generierungsmaschine (26) mit einer Eingangsphase (36) der drehenden elektrischen Antriebsmaschine (24) umfassend, wobei das Zuführungsverfahren, für jede Eingangsphase (36), auch das Schalten der entsprechenden Wicklungen (39) in Reihe oder parallel in Abhängigkeit von einer Motordrehzahl enthält.

7. Verfahren zum Zuführen von Kraftstoff zu einem Motor (18) nach Anspruch 6, das, für jede Eingangsphase (36), die entsprechenden Wicklungen (39) parallel geschaltet enthält, wenn die Motordrehzahl kleiner oder gleich einer vorbestimmten schaltdrehzahl ist, andernfalls in Reihe.

## Claims

1. An actuating device (12) intended to drive at least one fuel pump (20) of a fuel pumping system (2) for an aircraft engine (18), the actuating device (12) including a motor rotating electric machine (24), a generator rotating electric machine (26) and an electrical connection member (27),
the motor rotating electric machine (24) being an asynchronous machine with Dahlander coupling comprising a first rotor (32), intended to be mechanically coupled to each pump (20) for actuation thereof, and a first stator (34) comprising at least one input phase (36), each input phase comprising two windings (39),
the generator rotating electric machine (26) comprising a second rotor (32), intended to be mechanically coupled to a shaft (37) of the engine (18) forming a drive shaft, and a second stator (40) comprising at least one output phase (42),
the electrical connection member (27) being configured to electrically connect each output phase (42) to an input phase (36),
the electrical connection member (27) being further configured so to connect, for each input phase (36), the corresponding windings (39) in series or in parallel according to a speed of the engine (18).

2. The actuating device (12) according to claim 1, wherein the electrical connection member (27) is configured so as to connect, for each input phase (36) of the motor rotating electric machine (24), the corresponding windings (39) in parallel if the speed of the engine is lower than or equal to a predetermined switching speed, and in series otherwise.

3. The actuating device (12) according to claim 1 or 2, wherein the motor rotating electric machine (24) comprises three input phases (36) connected together according to a delta connection,
the two windings (39) of each input phase (36) being electrically connected together by their ends at a midpoint (46), each winding (39) of a given input phase (36) being connected to a corresponding winding (39) of another respective input phase (36) at its end opposite to the corresponding midpoint (46) to form a vertex (49),
the electrical connection member (27) including a control stage (50), a first stage of switches (52), a second stage of switches (54) and a third stage of switches (56),
each input of the first stage of switches (52) being electrically connected to a respective output phase (42) of the generator rotating electric machine (26), each output of the first stage of switches (52) being connected to the midpoint (46) of a respective input phase (36),
each input of the second stage of switches (54) being electrically connected to a respective output phase (42) of the generator rotating electric machine (26), each output of the second stage of switches (54) being connected to a respective vertex (49) of the first stator (34),
the inputs of the third stage of switches (56) being electrically connected together, each output of the third stage of switches (56) being connected to the midpoint (46) of a respective input phase (36),
the control stage (50) being configured so as to control, when the speed of the engine (18) is higher than a predetermined switching speed, the first stage of switches (52) to be in an on state, and each one amongst the second stage of switches (54) and the third stage of switches (56) to be in an off state,
the control stage (50) being also configured so as to control, when the speed of the engine (18) is lower than or equal to the predetermined switching speed, the first stage of switches (52) to be in an off state, and each one amongst the second stage of switches (54) and the third stage of switches (56) to be in an on state.

4. A fuel pumping system (12) for an aircraft engine, the pumping system (12) comprising at least one fuel pump (20) and an actuating device (12) according to any one of claims 1 to 3, the first rotor (32) of the motor rotating electric machine (24) being mechanically coupled to each pump (20) for actuation thereof.

5. An aircraft embedding a pumping system (12) according to claim 4, each pump (20) being inserted between a fuel tank (14) of the aircraft and a fuel injection device (16) of an engine (18) of the aircraft, the second rotor (38) of the generator rotating electric machine (26) being mechanically coupled to a shaft (37) of the engine (18).

6. A method for supplying fuel to an engine of an aircraft according to claim 5, comprising connecting each output phase (42) of the generator rotating electric machine (26) to an input phase (36) of the motor rotating electric machine (24), the supply method also including, for each input phase (36), connecting the corresponding windings (39) in series or in parallel according to a speed of the engine.

7. The method for supplying fuel to an engine (18) according to claim 6, including, for each input phase (36), connecting the corresponding windings (39) in parallel if the speed of the engine is lower than or equal to a predetermined switching speed, and in series otherwise.
